# EUROPEAN PATENT APPLICATION

(11) **EP 1 895 355 A2**
(43) Date of publication of application: **05.03.2008**
(21) Application number: 07015050.3
(22) Date of filing: 01.08.2007
(51) Int. Cl.: G02F 1/13357, G02F 1/1333

(54) **Splice joint-like seams between LED panel tiles in a backlight unit for a display device**

(30) Priority: 09.08.2006 KR 20060075302
(71) Applicant: Samsung Electronics Co., Ltd., Yeongtong-gu Suwon-city, Gyeonggi-do 442-742 (KR)
(72) Inventor: Song, Si Joon, Yongin-Si Gyeonggi-Do, 446-920 (KR); Kim, Gi Cherl, Yongin-Si Gyeonggi-Do, 446-557 (KR); Chang, Moon Hwan, Cheonan-Si Chungcheongnam-Do, 330-786 (KR)
(74) Representative: Dr. Weitzel & Partner

(57) **Abstract**

The present invention discloses a backlight unit and a display device having the same. The backlight unit includes an assembly of a plurality of boards having a plurality of light emitting diodes respectively mounted thereon as a light source of the backlight unit. A first board is fixed using a fixing member, and a second board, which is adjacent to the first board, is fixed by the first board, so that the boards can be prevented from coming loose.

## Description

members of circuit boards may be arranged adjacent to each other. When the fixing members are arranged adjacent to each other, luminance may be seriously reduced due to an interval between adjacent fixing members and the circuit boards.

Further, it may take a lot of time to fasten the fixing members to the circuit boards, thereby reducing productivity. Furthermore, productivity may be further reduced for bigger LCDs, which require more fixing members.

### SUMMARY OF THE INVENTION

The present invention provides a backlight unit and a display device having the backlight unit. The number of fixing members may be reduced, thereby preventing reduction of luminance in adjacent regions of the circuit boards, by forming a fixing pattern to couple and fasten adjacent circuit boards in a vertical and/or horizontal direction at respective regions of the circuit boards.

Additional features of the invention will be set forth in the description which follows, and in part will be apparent from the description, or may be learned by practice of the invention.

The present invention discloses a backlight unit including at least one pair of boards. The pair of boards includes a first board and a second board, and a plurality of light emitting element portions are respectively mounted on the first board and the second board. A first fixing pattern is arranged in a side region of the first board, and a second fixing pattern is arranged in a side region of the second board to overlap with the first fixing pattern. A receiving member accommodates the first and second boards, and a first fixing member is arranged in a region adjacent to the first or second fixing pattern to fix the first or second board to the receiving member.

The present invention also discloses a backlight unit including at least one pair of boards. The pair of boards includes a first board and a second board, and a plurality of light emitting element portions are respectively mounted on the first board and the second board. A first fixing pattern is arranged in a side region of the first board, and a second fixing pattern is arranged in a side region of the second board to overlap with the first fixing pattern. A receiving member accommodates the first and second boards, and a first fixing member is arranged in an overlapping region of the first and second fixing patterns to fix the first and second boards to the receiving member.

The present invention also discloses a backlight unit including a receiving member, a plurality of boards having a plurality of light emitting element portions respectively mounted thereon and arranged within the receiving member, and a first fixing member. The first fixing member fixes a first board to the receiving member, and the first board is arranged in an upper portion of an overlapping region in which the first board and a second board at least partially overlap with each other.

The present invention also discloses a liquid crystal display including a backlight unit and a display panel. The backlight unit includes a receiving member, a plurality of boards arranged within the receiving member and having a plurality of light emitting element portions respectively mounted thereon, and a first fixing member fixing a first board to the receiving member. The first board is arranged in an upper portion of an overlapping region in which the first board and a second board at least partially overlap with each other. The display panel displays an image using light emitted from the backlight unit.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention are incorporated in and constitute a part of this specification, illustrate embodiments of the invention, and together with the description serve to explain the principles of the invention.
FIG. 1 is an exploded perspective view showing a backlight unit according to a first exemplary embodiment of the present invention.
FIG. 2 is a perspective view showing the backlight unit according to the first exemplary embodiment of the present invention.
FIG. 3 is a sectional view showing the backlight unit according to the first exemplary embodiment of the present invention.
FIG. 4 is a sectional view showing a light emitting element portion mounted to the backlight unit according to the first exemplary embodiment of the present invention.
FIG. 5 and FIG. 6 are plan views showing a second board and electrical connections of the light emitting element portions according to the first exemplary embodiment of the present invention.
FIG. 7 and FIG. 8 are circuit diagrams showing electrical connections of the light emitting element portions.
FIG. 9, FIG. 10, and FIG. 11 are sectional views showing backlight units according to modifications of the first exemplary embodiment.
FIG. 12 is an exploded perspective view showing a backlight unit according to a second exemplary embodiment of the present invention.
FIG. 13 is a perspective view showing the backlight unit according to the second exemplary embodiment of the present invention.
FIG. 14 is an exploded perspective view showing a backlight unit according to a modification of the second exemplary embodiment of the present invention.
FIG. 15 is a perspective view showing a backlight unit according to a modification of the second exemplary embodiment.
FIG. 16 is an exploded perspective view showing a backlight unit according to a third exemplary embodiment of the present invention.
FIG. 17 is a perspective view showing the backlight unit according to the third exemplary embodiment of the present invention.
FIG. 18 is a sectional view showing the backlight unit according to the third exemplary embodiment of the present invention.
FIG. 19 is an exploded perspective view showing a backlight unit according to a fourth exemplary embodiment of the present invention.
FIG. 20 is a perspective view showing the backlight unit according to the fourth exemplary embodiment of the present invention.
FIG. 21 is an exploded perspective view showing a display device according to an exemplary embodiment of the present invention.

### DETAILED DESCRIPTION OF THE ILLUSTRATED EMBODIMENTS

Hereinafter, exemplary embodiments of the present invention will be described in detail with reference to the accompanying drawings. However, the present invention is not limited to the exemplary embodiments but may be implemented into a variety of different forms. These exemplary embodiments are provided only for illustrative purposes and for full understanding of the scope of the present invention by those skilled in the art. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "below," "lower", "under," "above", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings.

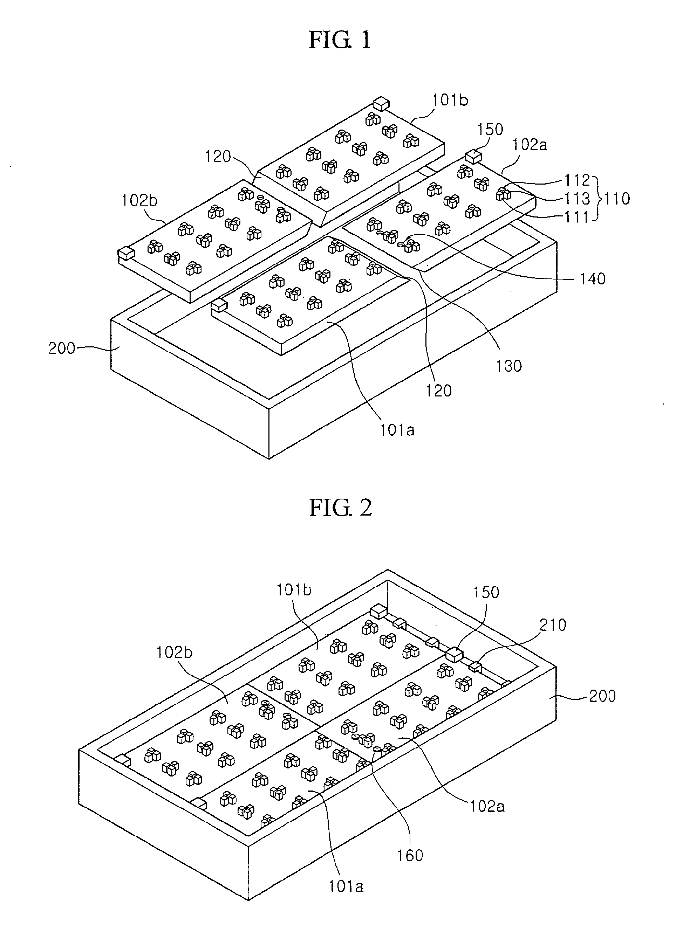

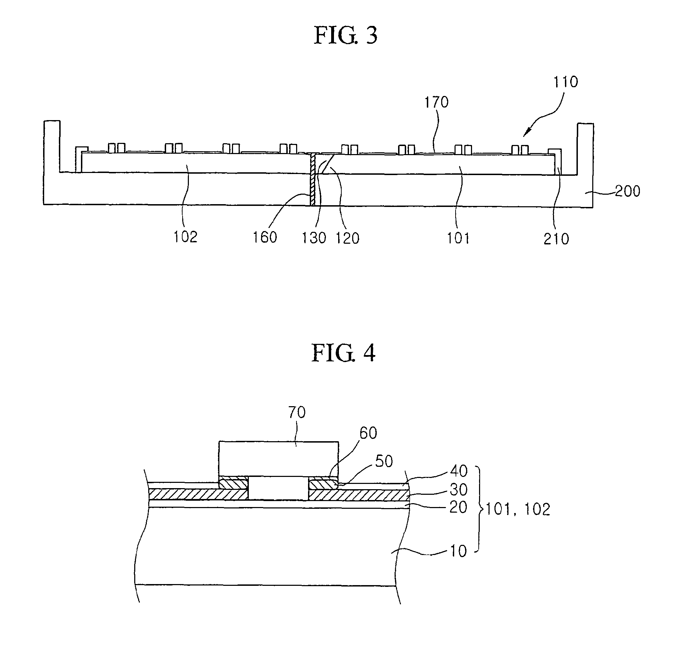

FIG. 1 is an exploded perspective view showing a backlight unit according to a first exemplary embodiment of the present invention. FIG. 2 is a perspective view showing the backlight unit according to the first exemplary embodiment of the present invention. FIG. 3 is a sectional view showing the backlight unit according to the first exemplary embodiment of the present invention. FIG. 4 is a sectional view showing a light emitting element portion mounted to the backlight unit according to the first exemplary embodiment of the present invention.

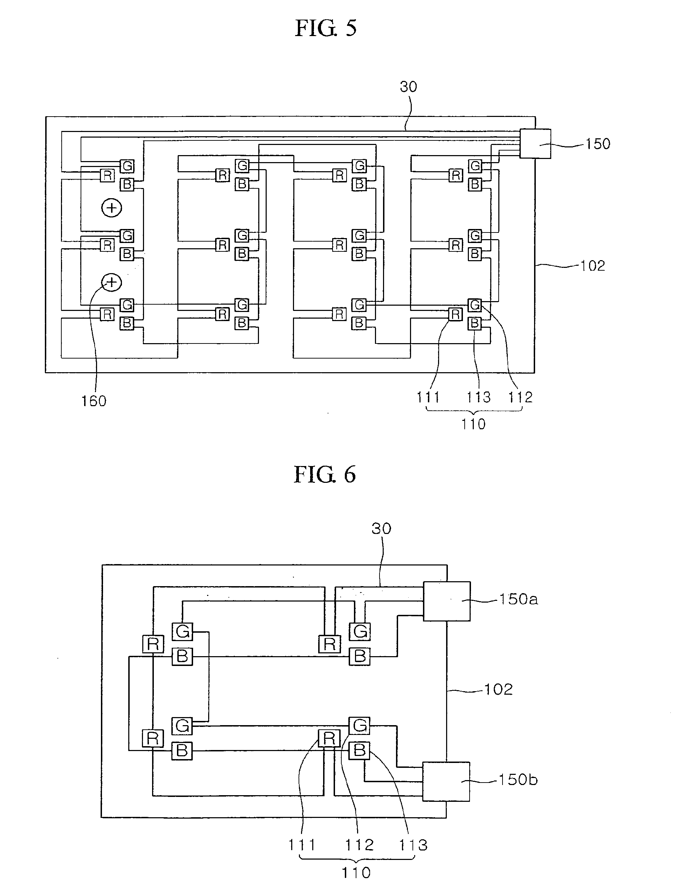

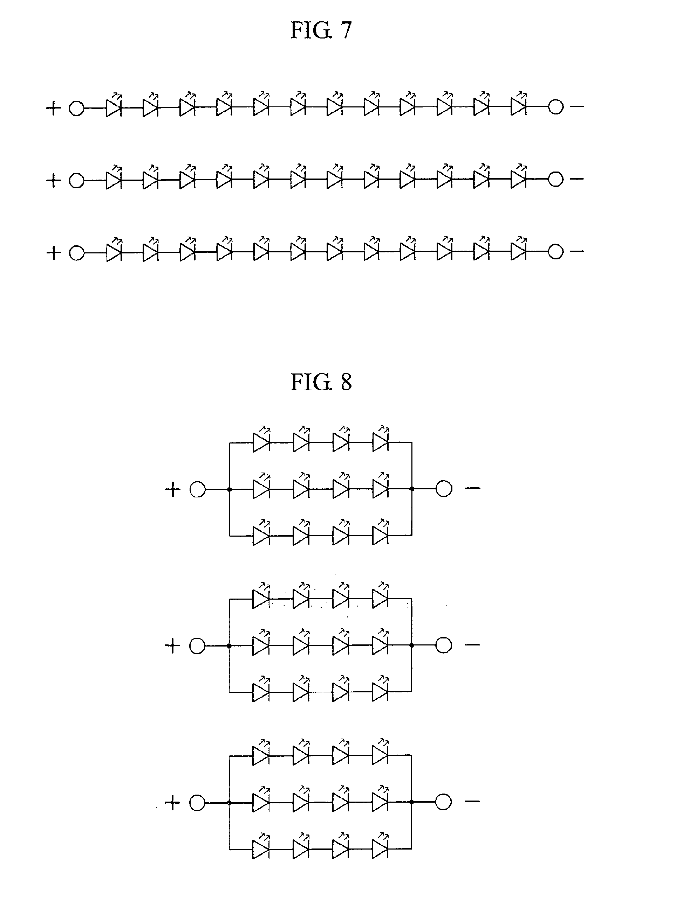

FIG. 5 and FIG. 6 are plan views showing a second circuit board and electrical connections of the light emitting element portions according to the first exemplary embodiment of the present invention. FIG. 7 and FIG. 8 are circuit diagrams showing electrical connections of the light emitting element portions.

Referring to FIG. 1, FIG. 2, FIG. 3, FIG. 4, FIG. 5, FIG. 6, FIG. 7, and FIG. 8, the backlight unit according to an exemplary embodiment includes a plurality of light emitting element portions 110, at least one first board 101 (101a and 101b) including mounted light emitting element portions 110 and a first fixing pattern 120, at least one second board 102 (102a and 102b) including mounted light emitting element portions 110 and a second fixing pattern 130, which corresponds to the first fixing pattern 120, a receiving member 200 for accommodating the first and second boards 101 and 102, and first fixing members 160 to fix the second board 102 to the receiving member 200.

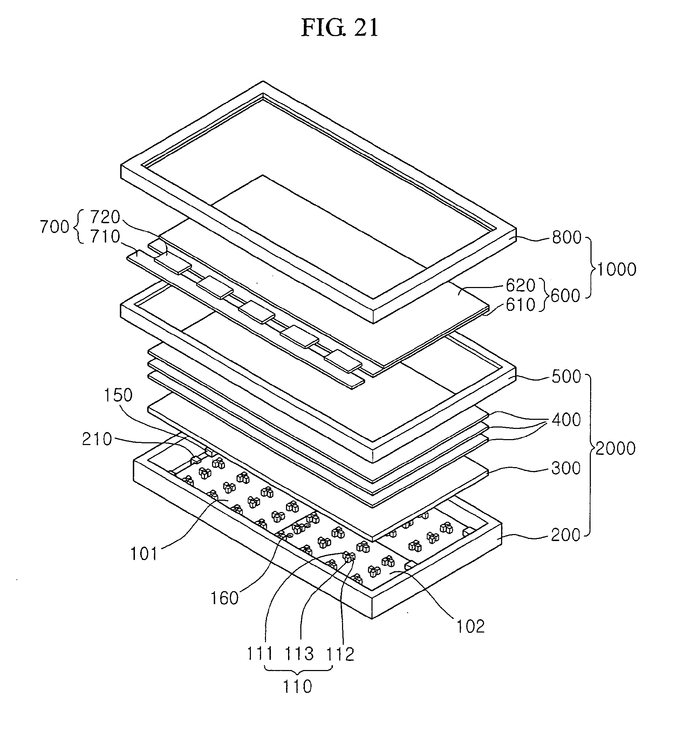

The backlight unit further includes a second fixing member 210 arranged at at least one edge of the receiving member 200 to fix the first board 101 and/or the second board 102, and reflection members 170 respectively provided on the upper surfaces of the first and second boards 101 and 102. As described below with reference to FIG. 21, the backlight unit may also include a plurality of optical sheets, a diffusion plate, and a mold frame.

The first and second boards 101 and 102 may each be a circuit board with conductive patterns printed on a metallic substrate. Preferably, a metal core printed circuit board is used. The first and second boards 101 and 102 each include a metal plate 10, a first insulation film 20 provided on the metal plate 10, a conductive pattern 30 patterned on the first insulation film 20, and a connector portion 150 provided at one end of the metal plate 10 and connected to the conductive pattern 30. Further, as described above, the first and second boards 101 and 102 include the first and second fixing patterns 120 and 130, respectively. The first and second fixing patterns 120 and 130 are provided in adjacent regions of the first and second boards 101 and 102.

The metal plate 10 may be an aluminum (Al) plate with a thickness of about 0.5 to about 5 mm. Alternatively, the metal plate 10 may be made of any metallic material. Mounting regions on which the plurality of light emitting element portions 110 will be mounted are defined on the metal plate 10. The conductive pattern 30 may be a wiring-shaped pattern to apply electric power to the light emitting element portions 110. The light emitting element portions 110 may be electrically connected to each other in series and/or parallel through the conductive pattern 30. The first insulation film 20 electrically insulates the metal plate 10 and the conductive pattern 30 from each other. The first insulation film 20 may be formed to a thickness such that it does not prevent heat conduction between the metal plate 10 and the conductive pattern 30. Accordingly, a heat conductive resin film may be used as the first insulation film 20. A second insulation film 40 may be formed on the conductive pattern 30 to protect the conductive pattern 30.The second insulation film 40 exposes the conductive pattern 30 in the region where the light emitting element portions 110 are mounted.

As shown in FIG. 1 and FIG. 2, each light emitting element portion 110 mounted on the first and second boards 101 and 102 includes a first, second, and third light emitting diode (LED) 111, 112, and 113, which emit red, green and blue light, respectively. The light emitting element portion 110 may emit white light through a combination of the light colors from the first, second, and third LEDs. Of course, the light emitting element portions 110 are not limited thereto. For example, each light emitting element portion 110 may further include an additional LED (not shown) to emit white light, or may alternatively be manufactured to include only a white LED. As shown in FIG. 4, each of the first to third LEDs 111, 112, and 113 includes an LED package 70 to diffuse light and lead terminals 60 through which power is supplied.

The first to third LEDs 111, 112, and 113 of the light emitting element portions 110 are mounted on the mounting regions defined on the first and second boards 101 and 102. Here, as shown in FIG. 4, the lead terminals 60 for each of the first to third LEDs 111, 112, and 113 may be electrically connected to the conductive pattern 30 of the first or second board 101 or 102 through soldering. The conductive patterns 30 and the first to third LEDs 111, 112, and 113 are connected to each other through solder bumps 50.

The manufacture thereof will be briefly described as follows. The first to third LEDs 111, 112, and 113 are arranged in the mounting regions of the first and second boards 101 and 102. Metallic solder is positioned between each lead terminal 60 of the first to third LEDs 111, 112, and 113 and the conductive pattern 30 of the first board 101 or the second board 102. The metallic solder is then melted by heating the first and second boards 101 and 102 at a temperature of about 100 to about 200 °C to electrically connect the lead terminal 60 and the conductive pattern 30 to each other.

The number of light emitting element portions 110 mounted on each of the first and second boards 101 and 102 may vary according to the size of a display panel provided over the backlight unit. Further, the number of light emitting element portions 110 may vary according to the light emitting efficiency of each of the first to third LEDs 111, 112, and 113. Furthermore, the number of light emitting element portions 110 mounted on the first board 101 may be identical with or different from the number of light emitting element portions 110 mounted on the second board 102.

The connector portion 150 may be connected to an external power source to apply power to the light emitting element portions 110 through the conductive pattern 30. The first to third LEDs 111, 112, and 113 may respectively be connected in series and/or parallel to two terminals (positive (+) and negative (-) terminals 150a and 150b) of the connector portion 150 through the conductive pattern 30. As shown in FIG. 5, FIG. 6, and FIG. 7, the plurality of first LEDs 111, which emit red light, are connected in series to one another between the positive (+) and negative (-) terminals 150a and 150b of the connector portion 150, which is provided in an edge region of the second board 102. Further, the plurality of second LEDs 112, which emit green light, are connected in series to one another between the positive (+) and negative (-) terminals 150a and 150b of the connector portion 150. Furthermore, the plurality of third LEDs 113, which emit blue light, are connected in series to one another between the positive (+) and negative (-) terminals 150a and 150b of the connector portion 150. In FIG. 5 and FIG. 7, twelve of each of the first to third LEDs 111, 112, and 113 are connected in series to one another between the positive (+) and negative (-) terminals of the connector portion 150. However, the present invention is not limited to a specific number of first, second, and third LEDs 111, 112, and 113 that may be connected in series to one another. Furthermore, a plurality of LEDs may be connected in series and parallel. In this case, each of first to third LED groups including four of each of the first to third LEDs 111, 112, and 113 are connected in series to one another as shown in FIG. 8. The three first to third LED groups are connected in parallel to one another between the positive (+) and negative (-) terminals of the connector portion 150. The number of LEDs connected in series and the number of LED groups connected in parallel are not limited thereto but may vary.

Here, the connector portion 150 may include a connector with the positive (+) and negative (-) terminals provided in one body, as shown in FIG. 5, or a plurality of connectors with positive (+) and negative (-) terminals 150a and 150b respectively provided thereto, as shown in FIG. 6. Because the first, second, and third LEDs 111, 112, and 113 have different driving voltages from one another, they may be electrically isolated from one another so that they may be appropriately supplied with power.

As described above, each of the first and second boards 101 and 102 in this exemplary embodiment includes a connector portion that is connected to an external power source. Accordingly, the light emitting element portions 110 on the first and second boards 101 and 102 may be independently driven for each board.

In this exemplary embodiment, the first board 101, with the first fixing pattern 120, and the second board 102, with the second fixing pattern 130, are joined to manufacture the backlight unit, and the first and second fixing patterns 120 and 130 overlap each other. The second fixing pattern 130 may be positioned on the first fixing pattern 120 to securely fix the first board 101.

As shown in FIG. I and FIG. 3, the first fixing pattern 120 provided at a side region of the first board 101 has a first inclined surface that slopes downward from the top surface to the bottom surface of the first board 101. The angle defined by the first inclined surface and the top surface of the first board 101 is preferably an obtuse angle, and the angle defined by the first inclined surface and the bottom surface thereof is preferably an acute angle. As shown in FIG. 1 and FIG. 3, the second fixing pattern 130 provided at a side region of the second board 102 has a second inclined surface that slopes upward from the bottom surface to the top surface of the second board 102. The angle defined by the second inclined surface and the top surface of the second board 102 is preferably an acute angle, and the angle defined by the second inclined surface and the bottom surface thereof is preferably an obtuse angle.

The sum of the obtuse angle defined by the first inclined surface and the top surface of the first board 101 and the acute angle defined by the second inclined surface and the top surface of the second board 102 is preferably 180 degrees. The first inclined surface may be formed by machining one sidewall of the first board 101 to have a predetermined slope. The second board 102 is turned over, and the second inclined surface may be formed by machining one sidewall of the second board 102 to have the same slope as the first inclined surface of the first board 101.

Referring to the vertical cross section of the overlapping region of the first and second fixing patterns 120 and 130 shown in FIG. 3, the first fixing pattern 120 of the first board 101 is provided in a lower portion of the overlapping region, and the second fixing pattern 130 of the second board 102 is provided in an upper portion of the overlapping region. The vertical cross section of an overlapping surface of the first and second fixing patterns 120 and 130 is shaped as an oblique line. Accordingly, since the second fixing pattern 130 presses the first fixing pattern 120 from the top thereof, the side region of the first board 101 can be prevented from coming loose.

Further, as shown in FIG. 1, the second board 102 includes a plurality of through-holes 140 provided in a region of the second board 102 adjacent to the second fixing pattern 130. As shown in FIG. 2 and FIG. 3, each first fixing member 160, such as a screw, extends through a respective through-hole 140 to secure the second board 102 to the receiving member 200. If the first fixing member 160 is a screw, a through-hole 140 may be provided in the receiving member 200 to receive the first fixing member 160.

The first fixing member 160 may alternatively be manufactured in the shape of a hook. In this case, the hook-shaped fixing member 160 may be attached to the receiving member 200.

Further, as shown in FIG. 2 and FIG. 3, a plurality of second fixing members 210, which fix the other side regions of the first and second boards 101 and 102, are provided on both edge regions of the receiving member 200. Each second fixing member 210 may be formed such that a portion of the receiving member 200 protrudes, or an additional member is attached to the receiving member 200. Here, the receiving member 200 includes a floor surface having a rectangular shape and a sidewall surface extending upward from the floor surface. The second fixing member 210 may be formed on the floor surface or on the sidewall surface. If the second fixing member 210 is formed on the floor surface, the second fixing member 210 may be manufactured in the shape of a hook to fix the first and second boards 101 and 102 to the receiving member 200. If the second fixing member 210 is formed on the sidewall surface, the second fixing member 210 may be manufactured in the shape of a projection extending parallel to the floor surface of the receiving member 200 to fix the first and second boards 101 and 102 to the receiving member 200. Alternatively, a screw may be used as the second fixing member 210 to secure the first and second boards 101 and 102 to the receiving member 200.

The second fixing pattern 130 of the second board 102 and the second fixing member 210 respectively fix opposite side regions of the first board 101. Further, the first and second fixing members 160 and 210 respectively fix opposite side regions of the second board 102. As such, the separate fixing members and fixing patterns press both the side regions of the first and second boards 101 and 102, thereby preventing them from coming loose. In other words, the second board 102 is fixed by force applied by the first and second fixing members 160 and 210. Further, the first board 101 is fixed by force applied by the second fixing member 210 and the second fixing pattern 130 of the second board 102.

Each of the first and second boards 101 and 102 according to this exemplary embodiment is formed in a substantially rectangular shape. Opposite side regions of each of the first and second boards 101 and 102 are fixed to the receiving member 200, so that each board can be prevented from coming loose. However, more than two side regions of each rectangular board may be fixed. Accordingly, the number of the first fixing members 160 for fixing the first and second boards 101 and 102 can be reduced.

That is, a case where two of the first fixing members 160 are used to fix a side region of the rectangular board as shown in FIG. 2 will be discussed as follows. Opposite side regions of the first and second boards 101 and 102 may each be fixed using two first fixing members 160. Thus, in this case, four first fixing members 160 are used for each board. However, since the second board 102 presses one side region of the first board 101 in the present embodiment, a first fixing member 160 is not required in this side region of the first board 101. Rather, the adjacent side regions of the first and second boards 101 and 102 may be fixed with only two first fixing members 160, which fix the side region of the second board 102. As such, the number of first fixing members 160 can be reduced by half.

Further, in this exemplary embodiment, the number of screws may be reduced as compared with the case where screws are used as all the first and second fixing members 160 and 210. That is, if four screws are used to fix each of the first and second boards 101 and 102, a total of eight screws are used. However, in this exemplary embodiment, the side region of the first board 101 is fixed by the side region (the second fixing pattern 130) of the second board 102, and the side region of the second board 102 is fixed using two screws. Additionally, the other side regions of the first and second boards 101 and 102 are fixed by means of the hooks of the receiving member 200 (i.e. the second fixing members 210). Thus, the first and second boards 101 and 102 may be fixed using only two screws.

Accordingly, in this exemplary embodiment, luminance uniformity of the backlight unit can be enhanced by reducing the number of the fixing members, such as screws, needed to assemble the backlight unit. That is, a fixing member such as the screw may absorb some light that is emitted from the light emitting element portion 110, thereby reducing an amount of the emitted light thereof. Thus, when fixing members are provided at both adjacent side regions of two substrates, luminance of the backlight unit may decrease in these adjacent side regions due to the fixing members. However, according to this exemplary embodiment, the number of fixing members provided in adjacent side regions of two boards is reduced, thereby preventing decreased luminance of a backlight unit.

In assembling such a backlight unit, the first board 101 is positioned on the receiving member 200 and fitted to the second fixing member 210. The second board 102 may then be positioned on the receiving member 200 and fitted to the second fixing member 210 so that the second fixing pattern 130 of the second board 102 overlaps with the first fixing pattern 120 of the first board 101. The receiving member 200 and the second board 102 are fixed to each other with the first fixing members 160.

An adhesive thermal pad (not shown) may be provided between the first and second boards 101 and 102 and the receiving member 200. Heat from the first and second boards 101 and 102 can be rapidly conducted to the receiving member 200 through the thermal pad. Moreover, the bonding force between the receiving member 200 and the first and second boards 101 and 102 can be enhanced due to the adhesion of the thermal pad.

The reflection members 170 may be provided on the first and second boards 101 and 102. In this case, the reflection member 170 is preferably formed on the entire region of the first board 101 except the mounting regions of the light emitting element portions 110. Further, the reflection member 170 is preferably formed on the entire region of the second board 102 except the mounting regions of the light emitting element portions 110 and the regions of the through-holes 140. The reflection members 170 can reflect light irradiated toward the surfaces of the first and second boards 101 and 102 among the light emitted from the light emitting element portions 110. Further, the reflection member 170 may be formed in regions of the first and second fixing patterns 120 and 130 of the first and second boards 101 and 102.

In this exemplary embodiment, the diffusion plate (not shown) and the plurality of optical sheets (not shown) are positioned on upper region of the first and second boards 101 and 102 having the light emitting element portions 110. The diffusion plate uniformly diffuses light from the light emitting element portions 110. The optical sheets enhance the luminance of the diffused light. Prism sheets may be included in the optical sheets to enhance the directionality of light.

Backlight units according to modifications of this embodiment will be described below.

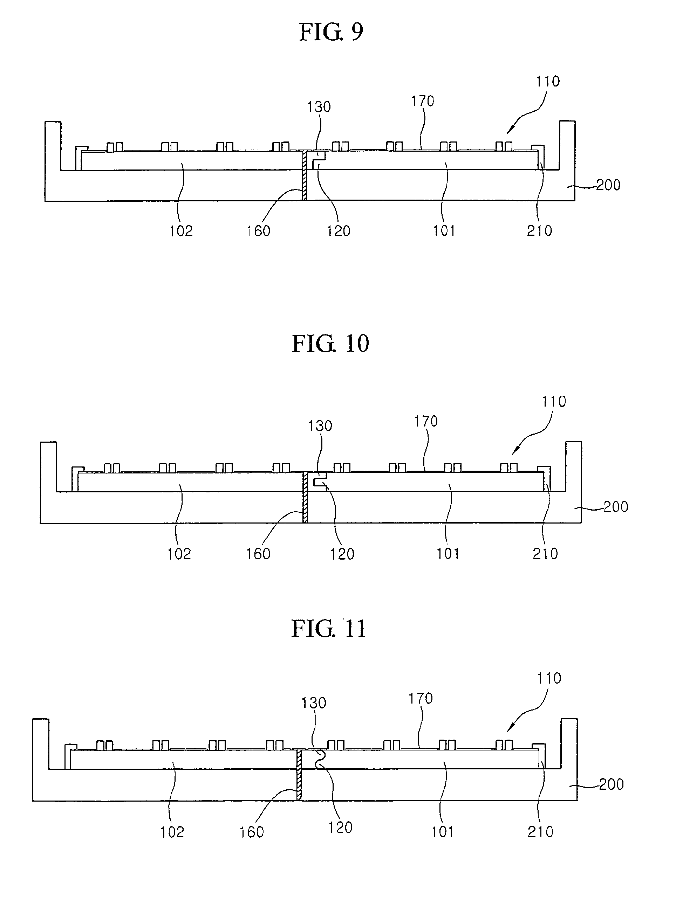

FIG. 9, FIG. 10, and FIG. 11 are sectional views schematically showing backlight units according to modifications of the first exemplary embodiment.

As shown in FIG. 9, a first fixing pattern 120 provided in a side region of a first board 101 includes a first projection, which is formed by a portion of a lower surface of the first board 101 that protrudes in a side direction. Assuming that the thickness of the first board 101 is 1, the thickness of the first projection may be 0.3 to 0.7. A second fixing pattern 130 provided in a side region of a second board 102 includes a second projection, which is formed by a portion of an upper surface of the second board 102 that protrudes in a side direction. Assuming that the thickness of the second board 102 is 1, the thickness of the second projection may be 0.3 to 0.7. When the thickness of each of the first and second boards 101 and 102 is 1, the thickness of each of the first and second projections may preferably be 0.5. A first fixing member 160, which is fixed to the receiving member 200, is provided in a region of the second board 102 adjacent to the second projection. Further, second fixing members 210 are provided at the other side regions of the first and second boards 101 and 102. According to this modification, the second projection of the second board 102 is positioned on the first projection of the first board 101, thereby preventing the side region of the first board 101 from coming loose. As FIG. 9 shows, a vertical cross section of an overlapping region of the first and second fixing patterns 120 and 130 is shaped in a step-shaped line.

Thus, the second fixing pattern 130 (i.e., the second projection) of the second board 102 and the second fixing member 210 fix opposite side regions of the first board 101, respectively. Further, the first and second fixing members 160 and 210 fix opposite side regions of the second board 102, respectively.

As shown in FIG. 10, a first fixing pattern 120 provided in a side region of a first board 101 includes a projection, which is formed by a portion of a side of the first board 101 that protrudes in a side direction. Assuming that the thickness of the first board 101 is 1, the thickness of the first projection may preferably be 0.2 to 0.6. A second fixing pattern 130 provided in a side region of a second board 102 includes a recess, which is formed by a portion of a side of the second board 102 that is recessed. The width and depth of the recess is preferably the same as that of the projection. In this modification, the projection of the first board 101 fits into the recess of the second board 102. A first fixing member 160, which is fixed to the receiving member 200, is provided in a region of the second board 102 adjacent to the recess. Accordingly, the first fixing member 160 prevents the second board 102 from coming loose at the region of the recess, and the recess and the projection inserted into the recess prevent the first board 101 from coming loose. Alternatively, the first fixing member 160 may be provided in a region of the first board 101 adjacent to the projection in order to fix the first board 101 to the receiving member 200. In this case, the first fixing member 160 prevents the first board 101 from coming loose at the region of the projection, and the projection of the first board 101 inserted into the recess of the second board 102 prevents the second board 102 from coming loose at the region of the recess. Here, referring to a vertical cross section of the overlapping region of the first and second boards 101 and 102 shown in FIG. 10, the protruding portion of the first board 101 is positioned between upper and bottom protruding portions of the second board 102. Thus, the second board 102 presses the first board 101 so that the first board 101 can be prevented from coming loose, and the first board 101 presses the second board 102 so that the second board 102 can be prevented from coming loose. In this modification, second fixing members 210 are provided in the other side regions of the first and second boards 101 and 102.

As shown in FIG. 11, a first fixing member 120 provided in a side region of a first board 101 includes a first concavo-convex portion, which is formed on a sidewall of the first board 101. A second fixing pattern 130 provided in a side region of a second board 102 includes a second concavo-convex portion, which is formed on a sidewall of the second board 102. The second concavo-convex portion corresponds to the first concavo-convex portion. That is, a concave portion is formed on an upper portion of the sidewall of the first board 101, and a convex portion is formed in a lower portion thereof. Further, a convex portion is formed in an upper portion of the sidewall of the second board 102, and a concave portion is formed on a lower portion thereof. Each of the first and second concavo-convex portions is preferably formed in a curved surface. Accordingly, a vertical cross section of a coupling region of the first and second boards 101 and 102, in which the first and second concavo-convex portions are coupled with each other, is shaped in a curved line (e.g., "S" line). The first and second concavo-convex portions can prevent the first and second boards 101 and 102 from coming loose.

Here, a first fixing member 160, which fixes the second board 102 to the receiving member 200, is provided in a region of the second board 102 adjacent to the second concavo-convex portion. Accordingly, the first fixing member 160 can prevent the second board 102 from coming loose at the region of the second concavo-convex portion, and the second concavo-convex portion mated with the first concavo-convex portion can prevent the first board 101 from coming loose at the region of the first concavo-convex portion. Alternatively, the first fixing member 160 may be provided in a region of the first board 101 adjacent to the first concavo-convex portion in order to fix the first board 101 to the receiving member 200.

As described above, the first board 101 and the second board 102 respectively having a plurality of light emitting element portions 110 mounted thereon are coupled together and used for a light source of the backlight unit in this embodiment.

Separate first and second boards 101 and 102 are used because with larger display devices, it may be difficult to manufacture larger boards, and larger boards may be harder to control because they may easily bend.

Accordingly, as FIG. 1 and FIG. 2 show, the backlight unit according to this exemplary embodiment includes two first boards 101a and 101b and two second boards 102a and 102b. Here, the primary first board 101a is positioned in a lower left side (i.e., a third quadrant) of the receiving member 200. The primary second board 102a is positioned in a lower right side (i.e., a fourth quadrant) of the receiving member 200 such that a first fixing pattern 120 of the primary first board 101a and a second fixing pattern 130 of the primary second board 102a overlap with each other. The secondary first board 101 b is positioned in an upper right side (i.e., a first quadrant) of the receiving member 200 such that one side of the secondary first board 101b is in close contact with that of the primary second board 102a. The secondary second board 102b is positioned in an upper left side (i.e., a second quadrant) of the receiving member 200 such that one side of the secondary second board 102b is in close contact with that of the primary first board 101 a and the first fixing pattern 120 of the secondary first board 101 b and the second fixing pattern 130 of the secondary second board 102b overlap with each other.

Alternatively, the primary first and second boards 101a and 102a and the secondary first and second boards 101b and 102b may be arranged in the receiving member 200 in mirror symmetry in lateral, longitudinal, and diagonal directions. The present invention is not limited thereto because a large-sized backlight unit may be manufactured using a plurality of first and second boards 101 and 102 having various arrangements.

Further, the present invention is not limited to the aforementioned descriptions. That is, a large-sized backlight unit can be manufactured by coupling adjacent regions of a plurality boards through first and second fixing patterns. Hereinafter, a backlight unit according to a second exemplary embodiment of the present invention will be described with reference to the following drawings. Some descriptions of the second exemplary embodiment that are similar with those of the first exemplary embodiment will be omitted herein. Further, the descriptions of the second exemplary embodiment can be applied to the first exemplary embodiment.

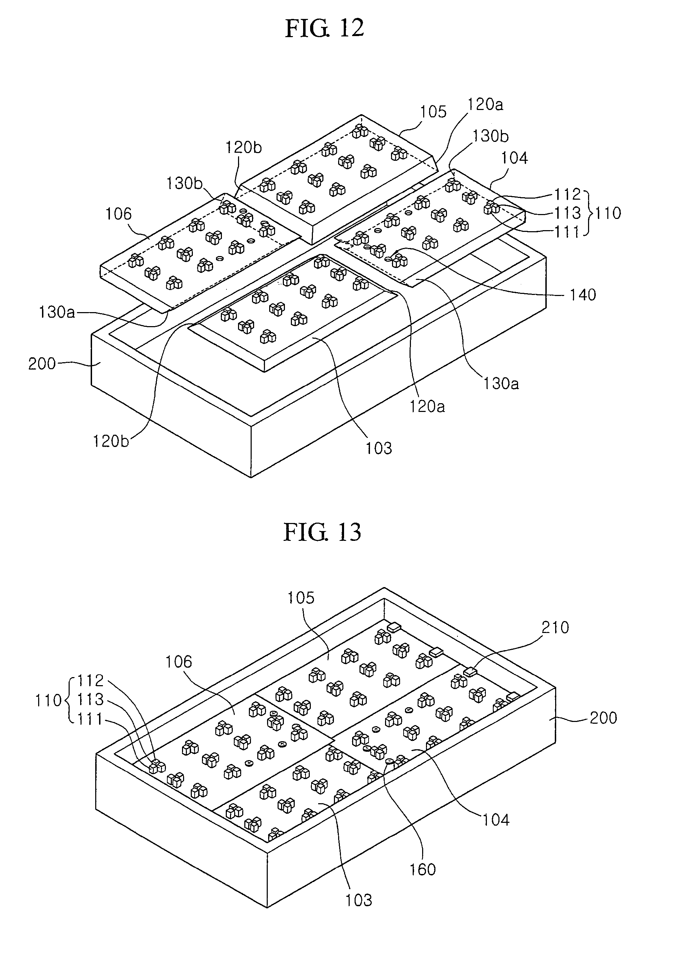

FIG. 12 is an exploded perspective view schematically showing the backlight unit according to the second exemplary embodiment of the present invention, and FIG. 13 is a perspective view schematically showing the backlight unit according to the second exemplary embodiment of the present invention.

Referring to FIG. 12 and FIG. 13, the backlight unit includes a plurality of light emitting element portions 110, first to fourth boards 103, 104, 105, and 106 having the light emitting element portions 110 respectively mounted thereon, and a receiving member 200 for accommodating the first to fourth boards 103, 104, 105, and 106.

As shown in FIG. 12 and FIG. 13, each of the first to fourth boards 103, 104, 105, and 106 may be manufactured in a substantially rectangular plate shape. The respective first to fourth boards 103, 104, 105, and 106 include at least one of first fixing patterns 120 (120a and 120b) and second fixing patterns 130 (130a and 130b) corresponding to the first fixing pattern 120. The first to fourth boards 103, 104, 105, and 106 are arranged adjacent to each other in the receiving member 200. The first fixing pattern 120 and/or the second fixing pattern 130 of one of the boards overlaps with the first fixing pattern 120 and/or the second fixing pattern 130 of the other boards adjacent thereto in an ordinate or abscissa direction.

In the present embodiment, the first and third boards 103 and 105 each include a first fixing pattern 120a and a first fixing pattern 120b, and the second and fourth boards 104 and 106 each include a second fixing pattern 130a and a second fixing pattern 130b.

The primary first fixing pattern 120a of the first board 103 and the primary second fixing pattern 130a of the second board 104 overlap with each other, and the secondary first fixing pattern 120b of the first board 103 and the primary second fixing pattern 130a of the fourth board 106 overlap with each other. The primary first fixing pattern 120a of the third board 105 and the secondary second fixing pattern 130b of the second board 104 overlap with each other, and the secondary first fixing pattern 120b of the third board 105 and the secondary second fixing pattern 130b of the fourth board 106 overlap with each other.

Accordingly, two of the four sides of each of the first and third boards 103 and 105 can be fixed by the second and fourth boards 104 and 106, respectively. First fixing members 160, which fix the second and fourth boards 104 and 106 to the receiving member 200, are provided in regions of the second and fourth boards 104 and 106 that are adjacent to the two second fixing patterns 130a and 130b. Here, through-holes 140, which the first fixing members penetrate, are formed in the regions adjacent to the second fixing patterns 130 of the second and fourth boards 104 and 106. Further, in this embodiment, second fixing members 210 protrude from sidewalls of the receiving member 200 in order to fix the first to fourth boards 103, 104, 105, and 106.

In FIG. 13, one of the remaining two sides in which the first and second fixing patterns 120 and 130 are not formed is fixed by the second fixing member 210. Accordingly, three sides of each of the first to fourth boards 103, 104, 105, and 106 are fixed to the receiving member 200, so that the first to fourth boards 103, 104, 105, and 106 can be prevented from coming loose. In other words, two of the four sides of each of the first and third boards 103 and 105 are fixed by the second fixing patterns 130 of the second and fourth boards 104 and 106, and one of the four sides of each of the first and third boards 103 and 105 is fixed by means of the second fixing member 210. On the other hand, two sides of each of the second and fourth boards 104 and 106 are fixed by the first fixing members 160, and one side of each of the second and fourth boards 104 and 106 is fixed by means of the second fixing member 210. Alternatively, second fixing members 210 may be provided to fix both sides in which the first and second fixing patterns 120 and 130 are not formed so that all four sides of each of the first to fourth boards 103, 104, 105, and 106 may be fixed.

Here, a region where the two first fixing patterns 120 of the first board 103 meet each other and a region where the two second fixing patterns 130 of the second board 104 meet each other are preferably cut away as shown in FIG. 12. This is because the first and second fixing patterns 120 and 130 of the third and fourth boards 105 and 106 may be positioned in the cutaway regions, respectively.

The assembly of the first to fourth boards 103, 104, 105, and 106 will be described as follows.

First, the first and third boards 103 and 105 are arranged so that at least one side of each board is fixed by the second fixing members 210 of the receiving member 200. The second board 104 is arranged so that it is fixed by the second fixing member 210 of the receiving member 200 and so that the second fixing patterns 130 thereof overlap with the first fixing patterns 120 of the first and third boards 103 and 105. The second board 104 is fixed to the receiving member 200 using the first fixing member 160. The fourth board 106 is arranged so that it is fixed by the second fixing member 210 of the receiving member 200 and so that the second fixing patterns 130 thereof overlap with the first fixing patterns 120 of the first and third boards 103 and 105. The fourth board 106 is then fixed to the receiving member 200 using the first fixing member 160. The backlight unit is manufactured by positioning a diffusion plate (not shown) and optical sheets (not shown) in the receiving member 200 having the fixed first to fourth boards 103, 104, 105, and 106.

Although the backlight unit described above includes four boards, more or less than four boards may be used in a backlight unit.

This embodiment is not limited to the aforementioned descriptions. For example, the first and second fixing patterns 120 and 130 provided in the first to fourth boards 103, 104, 105, and 106 may be modified so that the first to fourth boards 103, 104, 105, and 106 can be coupled to each other using various combinations of the first and second fixing patterns 120 and 130.

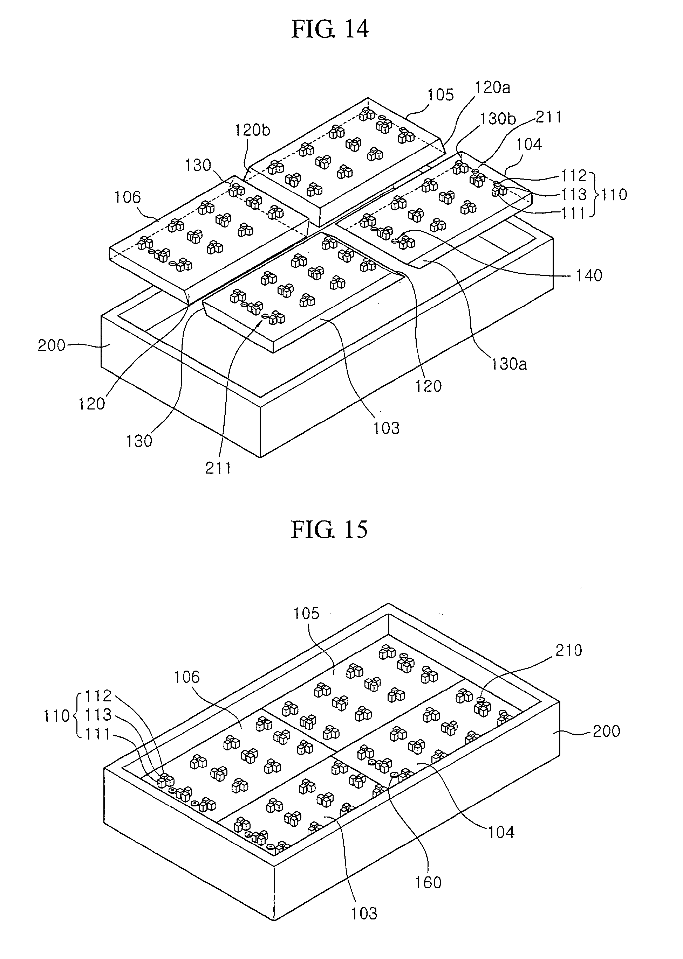

FIG. 14 is an exploded perspective view schematically showing a backlight unit according to a modification of the second exemplary embodiment of the present invention, and FIG. 15 is a perspective view schematically showing a backlight unit according to the modification of the second exemplary embodiment.

Referring to FIG. 14, the first and fourth boards 103 and 106 each include a first fixing pattern 120 and a second fixing pattern 130, the second board 104 includes two second fixing patterns 130a and 130b, and the third board 105 includes two first fixing patterns 120a and 120b.

The first fixing pattern 120 of the first board 103 and the primary second fixing pattern 130a of the second board 104 overlap with each other. The secondary second fixing pattern 130b of the second board 104 and the primary first fixing pattern 120a of the third board 105 overlap with each other. The secondary first fixing pattern 120b of the third board 105 and the second fixing pattern 130 of the fourth board 106 overlap with each other. And the first fixing pattern 120 of the fourth board 106 and the second fixing pattern 130 of the first board 103 overlap with each other.

Accordingly, two of the four sides of the third board 105 are fixed by the second and fourth boards 104 and 106, respectively. One side of the fourth board 106 is fixed by the first board 103, and one side of the first board 103 is fixed by the second board 104. Further, first fixing members 160, which fix the second board 104 to a receiving member 200, are provided in a region of the second board 104 adjacent to the primary second fixing pattern 130a. Through-holes 140, which the first fixing members 160 penetrate, are formed in the second board 104. Furthermore, in this modification, the first to fourth boards 103, 104, 105, and 106 are fixed to the receiving member 200 using screws as second fixing members 210, as shown in FIG. 15. Accordingly, through-holes 211, which the second fixing members 210 penetrate, are formed in the respective first to fourth boards 103, 104, 105, and 106.

Consequently, the first board 103 is prevented from coming loose by the second fixing member 210 and the second board 104. The second board 104 is prevented from coming loose by the first and second fixing members 160 and 210. The third board 105 is prevented from coming loose by the second and fourth boards 104 and 106, as well as the second fixing member 210. And the fourth board 106 is prevented from coming loose by the first board 103 and the second fixing member 210.

Further, the present invention is not limited to the aforementioned descriptions. For example, first and second boards may be simultaneously fixed to a receiving member using fixing members, thereby simplifying an assembling process for manufacturing a large-sized backlight unit. Hereinafter, a backlight unit according to a third exemplary embodiment of the present invention will be described with reference to the following drawings. Some descriptions of the third exemplary embodiment that are similar with the aforementioned descriptions will be omitted. Further, the third exemplary embodiment can be applied to the first and second exemplary embodiments.

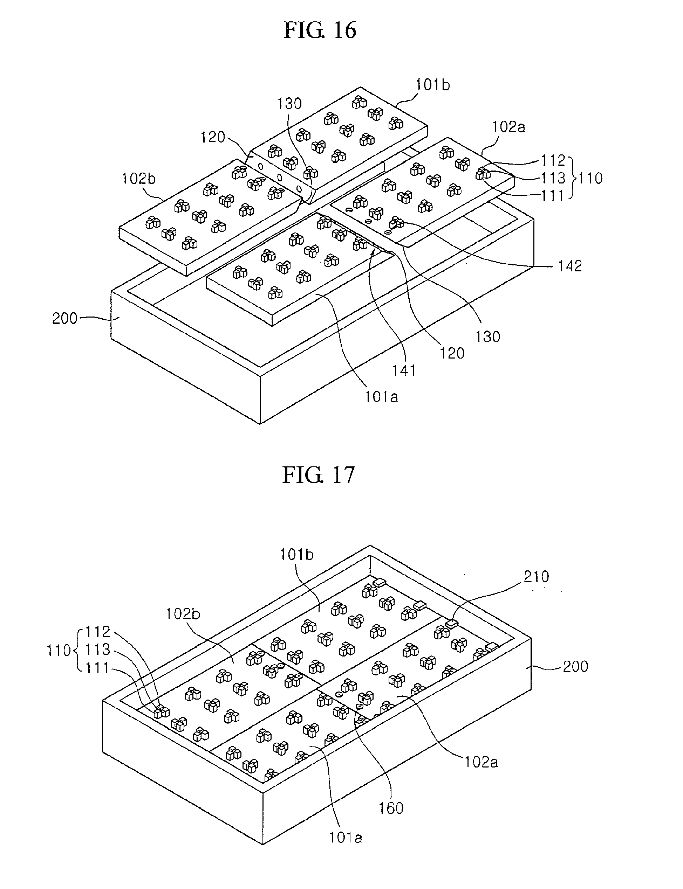

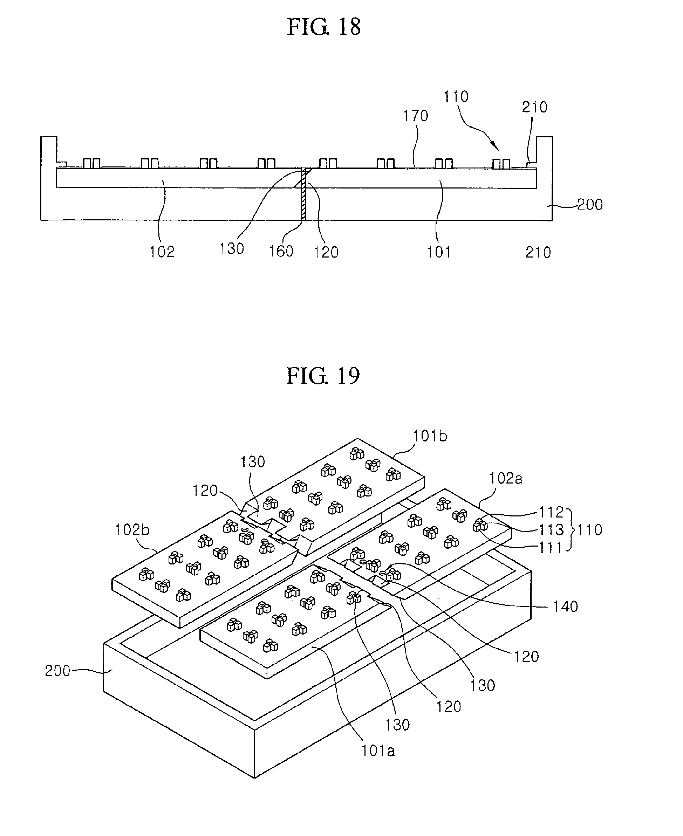

FIG. 16 is an exploded perspective view schematically showing the backlight unit according to the third exemplary embodiment of the present invention, and FIG. 17 is a perspective view schematically showing the backlight unit according to the third exemplary embodiment of the present invention. FIG. 18 is a sectional view schematically showing the backlight unit according to the third exemplary embodiment of the present invention.

Referring to FIG. 16, FIG. 17, and FIG. 18, the backlight unit includes a plurality of light emitting element portions 110, at least one first board 101 (101 a and 101b) and at least one second board 102 (102a and 102b) having the light emitting element portions 110 respectively mounted thereon, a receiving member 200 for accommodating the first and second boards 101 and 102, and first fixing members 160 provided in an overlapping region of the first and second boards 101 and 102 to fix the first and second boards 101 and 102 to the receiving member 200. Additionally, second fixing members 210 protrude from sidewalls of the receiving member 200 in order to fix the boards 101 and 102.

The first board 101 includes a fixing pattern 120 that overlaps with a second fixing pattern 130 of the second board 102. First through-holes 141, which the first fixing members 160 penetrate, are provided in the first fixing pattern 120. Second through-holes 142, which the first fixing members 160 penetrate, are provided in the second fixing pattern 130. As shown in FIG. 16 and FIG. 18, the first fixing pattern 120 has an inclined surface with a downward slope, and the second fixing pattern 130 has an inclined surface with an upward slope corresponding to the first fixing pattern 120. Thus, when the first fixing pattern 120 of the first board 101 and the second fixing pattern 130 of the second board 102 overlap with each other, the second fixing pattern 130 is positioned over the first fixing pattern 130. When the first and second fixing patterns 120 and 130 overlap with each other, the thickness of the overlapping region may be identical with that of each of the first and second boards 101 and 102.

The first fixing member 160 penetrates the first and second through-holes 141 and 142 and fixes the first and second boards 101 and 102 to the receiving member 200 at the regions of the first and second fixing patterns 120 and 130. A screw, fixing pin, or the like may be used for the first fixing member 160. Alternatively, the first fixing member 160 may include a hook-shaped projection on the receiving member 200. The first fixing member 160 may prevent the first and second boards 101 and 102 from coming loose at regions of the first and second fixing patterns 120 and 130.

In this embodiment, the regions of the first and second fixing patterns 120 and 130 of the first and second boards 101 and 102 overlap with each other, and the overlapping regions are fixed to the receiving member 200 with the first fixing members 160. Accordingly, fewer first fixing members 160 may be used to fix the first and second boards 101 and 102.

Further, the present invention is not limited to the aforementioned descriptions. For example, a plurality of first and second fixing patterns may be provided in each of the first and second boards. Hereinafter, a backlight unit according to a fourth exemplary embodiment of the present invention will be described with reference to the following drawings. Some descriptions of the fourth exemplary embodiment that are similar with the aforementioned descriptions will be omitted. Further, the fourth exemplary embodiment can be applied to the first to third exemplary embodiments.

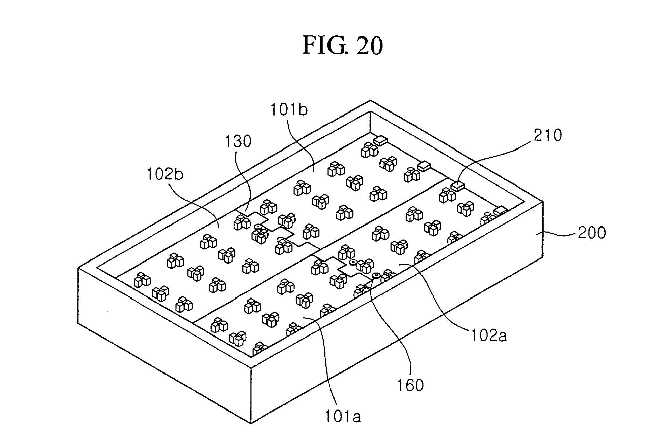

FIG. 19 is an exploded perspective view schematically showing the backlight unit according to the fourth exemplary embodiment of the present invention, and FIG. 20 is a perspective view schematically showing the backlight unit according to the fourth exemplary embodiment of the present invention.

Referring to FIG. 19 and FIG. 20, the backlight unit according to this embodiment comprises at least one first board 101 (101a and 101b) with a plurality of light emitting element portions 110 mounted thereon, at least one second board 102 (102a and 102b) with a plurality of light emitting element portions 110 mounted thereon, and a receiving member 200 for accommodating the first and second boards 101 and 102.

First and second fixing patterns 120 and 130 corresponding to each other are provided in side regions of the first and second boards 101 and 102, respectively. As shown in FIG. 19, a primary first board 101a includes three first fixing patterns 120 and two second fixing patterns 130. Each second fixing pattern 130 is provided between two first fixing patterns 120. A primary second board 102a includes three second fixing patterns 130 and two first fixing patterns 120. Each first fixing pattern 120 is provided between two second fixing patterns 130. The three first fixing patterns 120 of the primary first board 101a correspond to the three second fixing patterns 130 of the primary second board 102a, and the two second fixing patterns 130 of the primary first board 101a correspond to the two first fixing patterns 120 of the primary second board 102a.

The first and second boards 101 and 102 are accommodated within the receiving member 200. Here, the first and second fixing patterns 120 and 130 of the first board 101 overlap with the first and second fixing patterns 120 and 130 of the second board 102. In this embodiment, a region of the second board 102 adjacent to the first and second fixing patterns 120 and 130 is fixed to the receiving member 200 using first fixing members 160. Thus, the first fixing patterns 120 of the first board 101 are fixed by the second fixing patterns 130 of the second board 102. Alternatively, a region of the first board 101 adjacent to the first and second fixing patterns 120 and 130 may be fixed to the receiving member 200 using the first fixing members 160. In this case, the first fixing patterns 120 of the second board 102 are fixed by the second fixing patterns 130 of the first board 101. As shown in FIG. 20, other sides of the first and second boards 101 and 102 are fixed to the receiving member 200 by second fixing members 210 that protrude from sidewalls of the receiving member 200. Accordingly, two opposing sides of the four sides of each of the rectangular first and second boards 101 and 102 may be fixed to the receiving member 200 in this embodiment. In this case, fewer fixing members such as screws may be needed to fix the first and second boards 101 and 102.

Hereinafter, a display device including a backlight unit according to the aforementioned embodiments of the present invention will be described.

FIG. 21 is an exploded perspective view schematically showing a display device according to an exemplary embodiment of the present invention.

Referring to FIG. 21, the display device includes a display unit 1000 positioned in an upper portion of the display device and a backlight unit 2000 positioned in a lower portion thereof.

The display unit 1000 includes an LCD panel 600 and a driving circuit 700.

The LCD panel 600 includes a thin film transistor (TFT) substrate 610, a common electrode substrate 620, and a liquid crystal layer between the TFT substrate 610 and the common electrode substrate 620. A transparent insulating substrate such as glass may be used for the TFT substrate 610 and the common electrode substrate 620. The TFT substrate 610 includes gate lines (not shown) extending in an abscissa direction and data lines (not shown) extending in an ordinate direction. A TFT and a pixel electrode are provided at a crossing region of a gate line and data line. A common electrode (not shown) and red (R), green (G), and blue (B) color filters (not shown) are provided on the common electrode substrate 620. A transparent conductor such as indium tin oxide (ITO) or indium zinc oxide (IZO) may be used for the pixel and common electrodes.

The driving of the aforementioned LCD panel 600 will be briefly discussed as follows. An electric signal is applied to the gate line to turn on the TFT. Accordingly, an electric signal is supplied from the data line to the pixel electrode, thereby changing an electric field between the pixel and common electrodes. The changed electric field changes the arrangement of liquid crystals provided between the TFT substrate 610 and the common electrode substrate 620, thereby changing light transmissivity of the liquid crystal layer to display a desired image on the LCD panel 600.

The driving circuit 700 comprises a control circuit substrate 710 and a flexible printed circuit board 720 for connecting the control circuit substrate 710 and the LCD panel 600. A plurality of control circuits, which control the operation of the LCD panel 600, are provided on the control circuit substrate 710. Although not shown, a data signal supply unit, which supplies an electric signal to the data lines, may be positioned in the form of an IC chip on the control circuit substrate 710. Further, although not shown, a gate signal supply unit, which supplies an electric signal to the gate lines, may be formed in the form of a stage in a peripheral region of the TFT substrate 610. Although FIG. 21 shows a single control circuit substrate 710, the present invention is not limited thereto but may further comprise an additional control circuit substrate with a gate signal supply unit positioned in the form of an IC chip. Further, the control circuit substrate 710 may also include a converter for converting an external power and an image signal into those suitable for an LCD panel.

When assembling the display panel, the flexible printed circuit board 720 may be bent such that the driving circuit 710 is positioned at a rear surface of the backlight unit 2000.

An upper receiving member 800 is provided over the LCD panel 600. The upper receiving member 800 may be manufactured in the shape of a rectangular frame using a material that is light, strong, and resists deformation, such as plastic. Accordingly, the upper receiving member 800 secures the LCD panel 600 and protects the LCD panel 600 and the backlight unit 2000 from external impact.

The backlight unit 2000 includes a plurality of boards 101 and 102 having a plurality of light emitting element portions 110 respectively mounted thereon, a receiving member 200 for accommodating the boards 101 and 102, and a diffusion plate 300 and optical sheets 400 provided over the boards 101 and 102.

The boards 101 and 102 are arranged within the receiving member 200 in a single layer with a substantially uniform thickness. The boards 101 and 102 may have various arrangements. Here, the boards 101 and 102 are arranged within the receiving member 200 in a matrix. The boards 101 and 102 may be arranged as described above with reference to FIGS. 1 - 20. Accordingly, the boards 101 and 102 having the light emitting element portions 110 respectively mounted thereon can be prevented from coming loose, and they may be in close contact with each other without a gap therebetween.

The diffusion plate 300 allows light from the light emitting element portion 110 to be emitted to the LCD panel 600 by diffusing the light such that the light faces to a front of the LCD panel 600 and has a uniform distribution in a broad range. The diffusion plate 600 is preferably a film made of a transparent resin with both surfaces coated with a light diffusion material.

The optical sheets 400 may include a polarization sheet and a luminance enhancement sheet. The polarization sheet polarizes incident light along a polarization axis and outputs the polarized light. The polarization sheet preferably outputs light only in a direction perpendicular to the LCD panel 600, thereby enhancing light efficiency. Further, the luminance enhancement sheet transmits light parallel to a transmission axis and reflects light perpendicular thereto. The transmission axis is formed in the same direction as the polarization axis of the polarization sheet, thereby enhancing transmission efficiency.

The receiving member 200 is formed in a cubic box shape with an open top face so that a receiving space with a predetermined depth is provided in the receiving member 200. The receiving member 200 includes second fixing members 210 provided in regions adjacent to sides of the first and second boards 101 and 102 that are opposite to the sides thereof where the first and second fixing patterns 130 and 140 are formed. The second fixing members 210 are formed on a floor surface of the receiving member 200. As described above, the second fixing members 210 may protrude from sidewalls of the receiving member 200.

The diffusion plate 300 and optical sheets 400 are also accommodated in the receiving member 200. This embodiment may further comprise a mold frame 500 for fixing the diffusion plate 300 and optical sheets 400. The mold frame 500 also fixes the LCD panel 600 provided thereover.

This embodiment may further comprise a power supply (not shown) connected to the connector portions of the boards 101 and 102 to supply power to the light emitting element portions 110.

As described above, in the present invention, a plurality of boards having a plurality of light emitting element portions respectively mounted thereon are coupled together, and thus can be used as a surface light source of a backlight unit.

Further, according to the present invention, a board is fixed using fixing members and a side region of the board fixes a side region of another board, so that fewer fixing members are needed to fix the boards.

Furthermore, in the present invention, the number of fixing members used in regions of boards adjacent to surfaces thereof coupled to each other and gaps between the boards may be reduced, whereby the luminance uniformity of a backlight unit can be enhanced.

Additionally, according to the present invention, both ends of an assembly of a plurality of boards can be fixed using hook-shaped fixing members provided in a receiving member.

Moreover, according to the present invention, power may be separately supplied to each board so that light emitting element portions mounted on the respective boards can be independently driven.

Although exemplary embodiments of the present invention have been described in detail hereinabove, it should be clearly understood that many variations and/or modifications of the basic inventive concepts taught herein, which may appear to those skilled in the present art, will still fall within the spirit and scope of the present invention. Thus, it is intended that the present invention cover the modifications and variations of this invention provided they come within the scope of the appended claims and their equivalents.

## Claims

1. A backlight unit, comprising:
a pair of boards comprising a first board and a second board;
a plurality of light emitting element portions respectively mounted on the first board and the second board;
a first fixing pattern arranged in a side region of the first board;
a second fixing pattern arranged in a side region of the second board, the second fixing pattern overlapping with the first fixing pattern;
a receiving member accommodating the first board and the second board; and
a first fixing member fixing the first board or the second board to the receiving member.

2. The backlight unit of claim 1, wherein the first fixing member is arranged in a region adjacent to the overlapping region of the board positioned in the upper portion of the overlapping region, or in the overlapping region of the board.

3. The backlight unit of claim 1, wherein the second fixing pattern is arranged on the first fixing pattern, and the first fixing member is arranged on the second board.

4. The backlight unit of claim 1, wherein the first fixing member is fixed to the receiving member after penetrating a hole of the first board or the second board from a top of the first board or the second board.

5. The backlight unit of claim 1, wherein the first fixing pattern is a first inclined surface with a downward slope, and the second fixing pattern is a second inclined surface with an upward slope, the second inclined surface corresponding to the first inclined surface.

6. The backlight unit of claim 1, wherein the first fixing pattern comprises a first concavo-convex portion arranged in a side of the first board, and the second fixing pattern comprises a second concavo-convex portion corresponding to the first concavo-convex portion.

7. The backlight unit of claim 1, wherein the first board and the second board each comprise a connector portion connected to an external power source and wherein the light emitting element portions each comprise first, second, and third light emitting diodes (LEDs) to emit red, green, and blue light, respectively, and the first, second, and third LEDs are electrically connected to first, second, and third pairs of positive and negative terminals of the connector portion, respectively.

8. The backlight unit of claim 1, further comprising a second fixing member arranged in a region of the first board or the second board that is adjacent to an edge of the receiving member, the second fixing member fixing the first board or the second board to the receiving member.

9. The backlight unit of claim 8, wherein the second fixing member comprises any one of a screw, a hook, and a projection protruding from a sidewall of the receiving member.

10. The backlight unit of claim 1, wherein the first board and the second board are arranged adjacent to each other in the receiving member.

11. The backlight unit of claim 1, wherein the first fixing member penetrates a hole in the first board and a hole in the second board.

12. The backlight unit of claim 1, wherein a vertical cross section of an overlapping surface of the first fixing pattern and the second fixing pattern is shaped in any one of an oblique line, a bent straight line, and a curved line.

13. A backlight unit, comprising:
a receiving member;
a plurality of boards comprising a plurality of light emitting element portions respectively mounted thereon, the boards being arranged within the receiving member; and
a first fixing member fixing a first board to the receiving member, the first board being arranged in an upper portion of an overlapping region in which the first board and a second board at least partially overlap with each other.

14. The backlight unit of claim 13, wherein the first fixing member is arranged in a region adjacent to the overlapping region of the first board or in the overlapping region of the first board.

15. The backlight unit of claim 13, wherein the boards are arranged in a matrix, and adjacent boards overlap with each other.

16. The backlight unit of claim 13, wherein the first board and a third board at least partially overlap with each other.

17. A liquid crystal display, comprising:
a backlight unit comprising a receiving member, a plurality of boards arranged within the receiving member and comprising a plurality of light emitting element portions respectively mounted thereon, and a first fixing member fixing a first board to the receiving member, the first board being arranged in an upper portion of an overlapping region in which the first board and a second board at least partially overlap with each other; and
a display panel to display an image using light emitted from the backlight unit.

18. The liquid crystal display of claim 17, wherein the backlight unit further comprises a reflection plate arranged on the boards, a diffusion plate arranged over the boards, and an optical sheet arranged over the boards.

19. The liquid crystal display of claim 17, wherein the first fixing member is arranged in a region adjacent to the overlapping region of the first board or in the overlapping region of the first board.

20. The liquid crystal display of claim 17, wherein the boards are arranged in a matrix, and adjacent boards overlap with each other.
